# EUROPEAN PATENT APPLICATION

(11) **EP 3 424 782 A1**
(43) Date of publication of application: **09.01.2019**
(21) Application number: 17179999.2
(22) Date of filing: 06.07.2017
(51) Int. Cl.: B60R 16/03, H01R 4/18, H02G 5/00

(54) **ELECTRIC BUS BAR**

(71) Applicant: Mahle International GmbH, 70376 Stuttgart (DE)
(72) Inventor: Didelot, Joffroy, 68320 Durrenentzen (FR)
(74) Representative: Grauel, Andreas

(57) **Abstract**

The invention relates to an electric bus bar (1), in particular for an electric device, more particularly for an electric heater of an air-conditioning unit of a motor vehicle, having a base plate (2) and a cable (3) of a harness, wherein the base plate (2) has a connecting means (4) for fastening and electrically connecting the cable (3), wherein the connecting means (4) is provided to create a crimping connection between the base plate (2) and the cable (3).

## Description

### Field of the invention

The invention relates to an electric bus bar, in particular for an electric device, more particularly for an electric heater of an air-conditioning unit of a motor vehicle.

### Description of the related art

Electric heaters are well known in the art especially for the use as a main heater or an auxiliary heater in a heating or an air-conditioning unit of a motor vehicle.

Such electric heaters are usually electrically connected to an electric power source and/or to a mass potential using cables of a harness. Within such electric heaters an electric bus bar is used to connect different electronic components to the potential to supply the electronic components with electric power.

According to the prior art such connection is realised by screwing using a screwing bolt or by using a brazed connection.

### Object of the invention solution, advantages

Therefore it is the object of the invention to provide an electric bus bar which is more easily connected to a cable of a harness.

The object is achieved by an electric heater according the features of claim 1.

According to an embodiment of the invention an electric bus bar is provided, in particular for an electric device, more particularly for an electric heater of an air-conditioning unit of a motor vehicle, having a base plate and a cable of a harness, wherein the base plate has a connecting means for fastening and electrically connecting the cable, wherein the connecting means is provided to create a crimping connection between the base plate and the cable. The bus bar allows the direct fastening of the cable to the extension plate which is a part of the bus bar. Therefore a mechanical and electrical connection between the base plate of the electrical bus bar and the cable is easily possible and without a third intermediate element.

According to another embodiment of the invention, it is of advantage that the base plate has an extension plate which provides the connecting means. With the extension plate a special means is provided which allows strong connection between the cable and the extension plate without a possible deformation of the base plate.

Furthermore it is possible that the extension plate is offset with regard to the base plate. This allows a shape of the base plate which is adapted to the electronic features of an electric device.

Furthermore it is of advantage that the extension plate comprises fastening fingers for fastening the cable of the harness to the extension plate. With the fastening fingers a secure and stable fastening of the cable on the extension plate is possible.

According to another idea according to the inventive concept it is of advantage that the base plate including the extension plate is made from a sheet metal. This allows a cost reduced production of the electric bus bar.

Furthermore it is of advantage, that the base plate and at least a part of the extension plate are overmolded with a plastic material. This leads to a compact design and the metal parts of the bus bar are protected from water, dirt, mechanical stress etc.

Further preferable embodiments of the invention are described in the claims and the following description of the drawings.

### Description of the drawings

The invention is explained in detail below by means of an exemplary embodiment and with reference to the drawings, in which:
- Fig.1: shows a schematic view of an electric bus bar with a cable of a harness, and
- Fig. 2: shows a schematic view of an electric bus bar with a cable of a harness overmolded with plastic material.

### Preferred embodiments of the invention

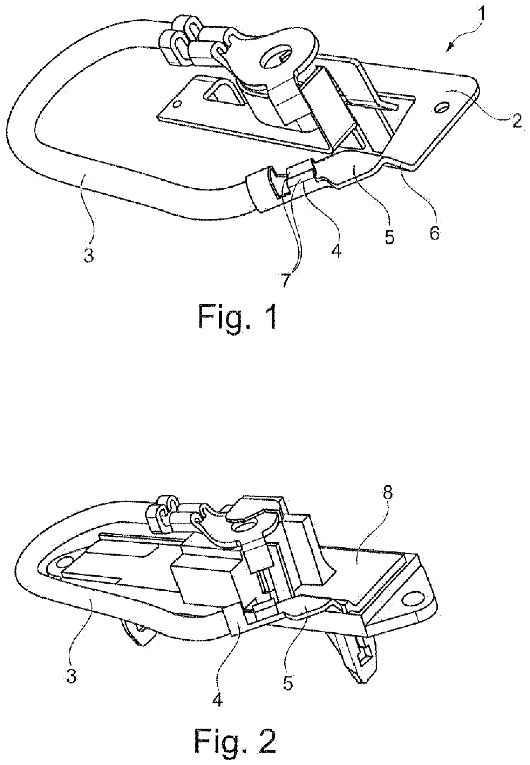

Fig. 1 shows a schematic view of an electric bus bar 1, in particular for an electric device, more particularly for an electric heater of an air-conditioning unit of a motor vehicle. Such electric heaters are usually provided with a control unit to supply power to different heater elements. Therefore an electric bus bar 1 is provided to supply power from an input line to the heater elements.

The electric bus bar 1 has a base plate 2 and a cable 3 of a harness is secured to the bus bar 1. The base plate 2 has a connecting means 4 for fastening and electrically connecting the cable 3 to the base plate 2 of the electric bus bar 1. Therefore the connecting means 4 is provided to create a crimping connection between the base plate 2 and the cable 3.

To allow a functional shape and location of the connecting means 4, the base plate 2 is provided with an extension plate 5, which is made in one piece with the base plate 2.

In an embodiment of the invention the base plate 2 and the extension plate 5 are made from sheet metal in one piece e.g. by stamping. This allows a more cost efficient manufacturing of the base plate 2.

Accordingly the base plate 2 is provided with an extension plate 5 which provides the connecting means 4 for connection of the cable 3 with the base plate 2.

As can be seen from figure 1, the base plate 2 has a region which is almost flat in shape. Additionally the extension plate 5 is flat in shape too. Therefore it is of advantage if the extension plate 5 is offset with regard to the base plate 2. Therefore between the base plate 2 and the extension plate 5 a transition area 6 is provided which allows an almost s-like shape of the base plate 2, transition area 6 and extension plate 2 in cross section.

In order to securely fasten the cable 3 to the extension plate 5 the extension plate 5 comprises fastening fingers 7 for fastening the cable 3 of the harness to the extension plate 5 by crimping.

As already mentioned the base plate 2 including the extension plate 5 is made from a sheet metal which may be overmolded by a plastic material 8, as can be seen in Figure 2. Such configuration of the overmolded electric bus bar 2 might be seen as a top frame of a jousting of an electronic control unit of an electrical heater.

While the invention has been explained with reference to the Figures, it will be clear to those skilled in the arts to which it pertains that a variety of modifications and changes can be made thereto without departing from the scope of the invention.

## Claims

1. Electric bus bar (1), in particular for an electric device, more particularly for an electric heater of an air-conditioning unit of a motor vehicle, having a base plate (2) and a cable (3) of a harness, wherein the base plate (2) has a connecting means (4) for fastening and electrically connecting the cable (3), **characterized in that** the connecting means (4) is provided to create a crimping connection between the base plate (2) and the cable (3).

2. Electric bus bar (1) according to claim 1, **characterized in that** the base plate (2) has an extension plate (5) which provides the connecting means (4).

3. Electric bus bar (1) according to claim 1, **characterized in that** the extension plate (5) is offset with regard to the base plate (2).

4. Electric bus bar (1) according to claim 1, **characterized in that** the extension plate (5) comprises fastening fingers (7) for fastening the cable (3) of the harness to the extension plate (5).

5. Electric bus bar (1) according to claim 1, **characterized in that** base plate (2) including the extension plate (5) is made from a sheet metal.

6. Electric bus bar (1) according to at least one of the preceding claims, **characterized in that** the base plate (2) and at least a part of the extension plate (5) are overmolded with a plastic material (8).
